# EUROPÄISCHE PATENTSCHRIFT

(11) **EP 2 409 860 B1**
(45) Veröffentlichungstag und Bekanntmachung des Hinweises auf die Patenterteilung: **05.12.2012**
(21) Anmeldenummer: 10007551.4
(22) Anmeldetag: 21.07.2010
(51) Int. Cl.: B60D 5/00, B62D 47/02

(54) **Drehkranzgelenk**
Swing bearing joint
Articulation à couronne rotative

(43) Veröffentlichungstag der Anmeldung: 25.01.2012
(73) Patentinhaber: Hübner GmbH, 34123 Kassel (DE)
(72) Erfinder: Karasek, Jens, 34260 Kaufungen (DE); Schulz, Ralf, 34317 Habichtswald (DE); Schneider, Günther, 34302 Guxhagen-Ellenberg (DE)
(74) Vertreter: Walther, Walther & Hinz GbR

(56) Entgegenhaltungen:
- EP-A1- 0 644 105
- WO-A1-84/01135
- DE-A1- 2 929 022
- DE-A1- 3 340 446
- DE-A1- 4 329 674

## Beschreibung

Die Erfindung betrifft ein Drehkranzgelenk zwischen zwei Fahrzeugteilen, z. B. einem Gelenkbus, wobei das Gelenk zwei Konsolträger umfasst, wobei ein jeder Konsolträger an einem Fahrzeugteil angeordnet ist, wobei jeder Konsolträger einen Drehring aufweist, wobei die beiden Drehringe der Konsolträger ineinander drehbar gelagert sind, wobei zur Dämpfung der Drehbewegung der beiden Konsolträger relativ zueinander eine Dämpfungseinrichtung vorgesehen ist.

Drehkranzgelenke der eingangs genannten Art finden insbesondere bei Gelenkbussen Einsatz; sie zeichnen sich dadurch aus, dass ein Gelenk vorgesehen ist, dass eine Knickbewegung zulässt, wie sie auftritt, wenn ein solches Fahrzeug um eine Kurve fährt. Daneben müssen von solchen Gelenken Nick- und Wankbewegungen aufgenommen werden, bzw. überlagerte Bewegungsarten von Nick-, Wank- und Knickbewegungen. Hierbei ist bekannt, insbesondere zur Aufnahme von Nickbewegungen, im Bereich der Anbindung des einen Konsolträgers an das eine Fahrzeugteil Gummimetalllager vorzusehen, deren Achse quer zur Längsachse des Fahrzeugs verläuft.

Aus der DE 43 29 674 B4 ist ein Drehkranzgelenk bekannt, umfassend zwei Konsolträger, wobei ein jeder Konsolträger einen Drehring aufweist, wobei die beiden Drehringe durch ein Kugellager miteinander in Verbindung stehen. Der eine Drehring weist auf seiner Außenseite eine Außenverzahnung auf, die mit einer entsprechenden Zahnstange kämmt, die Bestandteil einer stirnseitig zu dem Drehring angeordneten Dämpfungseinrichtung ist. Die aus dieser Literaturstelle bekannte Dämpfungseinrichtung ist äußerst aufwendig im Aufbau und verteuert insofern das Gelenk. Bekannt ist darüber hinaus die Dämpfung eines Drehkranzgelenks über mindestens eine Kolben-Zylindereinrichtung, wobei sich die Kolben-Zylindereinrichtung mit ihrem einen Ende an dem einen Konsolträger und mit ihrem anderen Ende an dem anderen Konsolträger abstützt. Mit solchen Dämpfungseinrichtungen der zuvor beschriebenen Art können nicht nur die Drehbewegungen der beiden Konsolträger relativ zueinander gedämpft erfolgen, vielmehr besteht auch die Möglichkeit einer Steuerung der Drehbewegung, indem beispielsweise das Gelenk versteift wird.

Ausgehend von dem eingangs dargestellten Stand der Technik liegt der Erfindung die Aufgabe zugrunde, ein Drehkranzgelenk der eingangs genannten Art bereitzustellen, das einerseits ein geringeres Bauvolumen aufweist und andererseits leicht zu warten ist.

Zur Lösung der Aufgabe wird erfindungsgemäß vorgeschlagen, dass in dem durch den inneren Drehring umschlossenen Raum ein Ringkammerdämpfer angeordnet ist, wobei der Ringkammerdämpfer zwei ineinander gelagerte, relativ zueinander verdrehbare Gehäuseteile aufweist, wobei das eine Gehäuseteil mit einem und das andere Gehäuseteil mit dem anderen Konsolträger in Verbindung steht. Hieraus wird Folgendes deutlich: Aufbauend auf einem bekannten Drehkranzgelenk, bei dem - wie dies bereits zu eingangs erwähnt worden ist - nach dem Stand der Technik Dämpfungselemente vorgesehen sind, beispielsweise in Form von Kolben-Zylindereinrichtungen, die zu beiden Seiten des Gelenks an dem Gelenk befestigt sind, oder stirnseitig durch eine Zahnstange-Zahnradverbindung mit dem einen Drehring in Verbindung stehen, wird nun nach der Erfindung der Dämpfer als Ringkammerdämpfer in dem durch den inneren Drehring gebildeten Raum eingebaut, was zum einen eine wesentliche Platzersparnis mit sich bringt, und zum anderen es ermöglicht, den Ringkammerdämpfer unabhängig von der Drehkranzverbindung zwischen den beiden Fahrzeugteilen bei Bedarf auszubauen.

Die Verwendung sogenannter Ringkammerdämpfer ist aus dem Stand der Technik bereits bekannt. In diesem Zusammenhang wird auf die DE 33 40 446 A1 verwiesen, die einen solchen Ringkammerdämpfer zeigt, wobei hier allerdings der Ringkammerdämpfer als solcher integraler Bestandteil des eigentlichen Drehgelenks ist.

Aus der EP 0 644 105 B1 ist eine weitere Ausführungsform eines Ringkammerdämpfers bekannt, bei der der Ringkammerdämpfer ebenfalls integraler Bestandteil des eigentlichen Drehgelenks ist. Das heißt, dass der Ringkammerdämpfer einerseits und das Drehgelenk andererseits in einer einteiligen Ausführungsform vorliegen. Demgegenüber ist bei der erfindungsgemäßen Lösung der Ringkammerdämpfer als solcher als gesonderter Bestandteil, in dem Raum angeordnet, der durch den inneren Drehring bereitgestellt wird, wobei lediglich eine Verbindung der beiden Gehäuseteile des Ringkammerdämpfers mit dem einen bzw. mit dem anderen Konsolträger vorgesehen ist. Ein Ringkammerdämpfer ist aus zwei Gehäuseteilen aufgebaut. Im Einzelnen kann hierbei vorgesehen sein, das eine untere Gehäuseteil, das beispielsweise als Topf ausgebildet ist, auf dem ersten Konsolträger anzuordnen, wohingegen der Läufer, der zusammen mit dem Topf den Ringkammerdämpfer bildet, und der relativ verdrehbar zum Topf in dem Topf gelagert ist, mit dem anderen, zweiten Konsolträger zu verbinden.

Nach einem weiteren Merkmal der Erfindung ist zur Verbindung zwischen dem Läufer und dem anderen, zweiten Konsolträger eine Traverse vorgesehen. Hieraus wird deutlich, dass bei einer Verdrehbewegung der beiden Konsolträger relativ zueinander, wie sie stattfindet, wenn z. B. ein Bus um eine Kurve fährt, der Läufer des Ringkammerdämpfers als ein Gehäuseteil sich relativ zum Topf als zweites Gehäuseteil verdreht. Das heißt, da der Ringkammerdämpfer ein gesondertes Bauteil zu dem Drehkranzgelenk ist, ist nunmehr eine gesonderte Verbindung zwischen dem Gehäuseteil des Ringkammerdämpfers einerseits und dem Konsolträger andererseits erforderlich ist, um diese Relativbewegung zu gewährleisten, nämlich die zuvor genannte Traverse.

Nach einem besonders vorteilhaften Merkmal ist der Ringkammerdämpfer vom Kraftfluss zwischen Vorder- und Hinterwagen entkoppelt. Es wurde bereits an anderer Stelle darauf hingewiesen, dass ein Gelenkfahrzeug den unterschiedlichsten Fahrbewegungen ausgesetzt ist. Neben den bereits zuvor erwähnten Knickbewegungen, wie sie auftreten, wenn ein solches Fahrzeug um eine Kurve fährt, sind vom Gelenk auch Wank- und Nickbewegungen aufzunehmen. Ist nun der Ringkammerdämpfer vom Kraftfluss zwischen Vorder- und Hinterwagen entkoppelt, muss der Ringkammerdämpfer bei den auftretenden Fahrbewegungen die entsprechenden Verformungskräfte aus den Konsolen nicht aufnehmen. Die Folge hiervon ist, dass der Ringkammerdämpfer anders dimensioniert sein kann, wie wenn dies der Fall ist, wenn ein solcher Ringkammerdämpfer nicht vom Kraftfluss entkoppelt wäre. In diesem Zusammenhang ist insbesondere vorgesehen, dass mindestens ein Gehäuseteil des Ringkammerdämpfers gegenüber dem mindestens einen Konsolträger elastisch nachgiebig gelagert ist. Das heißt, dass mindestens der Läufer und/oder der Topf des Ringkammerdämpfers elastisch nachgiebig mit dem jeweiligen Konsolträger verbunden ist. Wird ein Drehkranzgelenk beispielsweise Nickbewegungen unterworfen, wie sie auftreten, wenn ein solches Fahrzeug über eine Kuppe oder durch eine Senke fährt, dann verkürzt oder verlängert sich der Abstand zwischen den beiden Fahrzeugteilen auf der Ober- bzw. auf der Unterseite, wodurch sich die Konsolen elastisch verformen. Durch die elastische Lagerung des mindestens einen Gehäuseteils des Ringkammerdämpfers gegenüber dem jeweiligen Konsolträger wird nunmehr erreicht, dass bei derartigen Bewegungsabläufen der Fahrzeuge relativ zueinander die hierdurch hervorgerufenen elastischen Verformungen der Konsolen kompensiert werden können.

In diesem Zusammenhang ist insbesondere vorgesehen, dass die Traverse elastisch nachgiebig in dem Konsolträger und/oder in dem Läufer gelagert ist. Dies kann im Einzelnen dadurch geschehen, dass die Traverse endseitig Stehbolzen aufweist, wobei mindestens einer der Stehbolzen in eine Buchse des Konsolträgers eingreift, wobei die Buchse eine Auskleidung aus elastisch nachgiebigem Material besitzt. Denkbar wäre in diesem Zusammenhang allerdings auch, die Traverse teleskopierbar auszugestalten, oder aber auch den Topf des Ringkammerkörpers als ein Gehäuseteil elastisch nachgiebig auf dem den Topf aufnehmenden Konsolträger anzuordnen. Wesentlich in diesem Zusammenhang ist ebenfalls, dass insbesondere zwischen der Wandung des Topfes als einem Teil des Ringkammerdämpfers und dem inneren Drehring des Drehkranzgelenks ein Abstand besteht, so dass der Ringkammerdämpfer seitlich mit dem Drehring nicht in Kontakt gerät.

In Bezug auf die Ausbildung des Ringkammerdämpfers wurde bereits verschiedentlich darauf hingewiesen, dass der aus zwei Gehäuseteilen bestehende Ringkammerdämpfer einen Läufer und einen Topf aufweist, wobei der Läufer oder der Topf mindestens eine Dämpfungsrippe zeigt, die in dem durch den Topf und den Läufer gebildeten ringkammerförmigen Dämpfungsraum hineinragt. Hierbei werden durch die mindestens eine Dämpfungsrippe zwei Ringkammerhälften gebildet, wobei zwischen den Ringkammerhälften eine Drosselverbindung vorgesehen ist. Die Drosselverbindung kann hierbei dadurch bereitgestellt werden, dass die Dämpfungsrippe selbst einen Durchgang mit einer Drossel aufweist, oder aber die beiden Ringkammerhälften durch eine Leitung verbunden sind, in der eine Drossel eingesetzt ist.

Nach einem weiteren Merkmal der Erfindung ist die Ringkammer durch Wandelemente in mehreren Teilkammern unterteilt, wobei in jede Teilkammer eine Dämpfungsrippe ragt. Hieraus wird deutlich, dass eine jede Teilkammer durch die Dämpfungsrippe in zwei Teilkammerhälften unterteilt wird. Durch eine solche Ausführungsform ist das Dämpfmoment einstellbar; dies vor dem Hintergrund, dass nicht nur eine einfache Dämpfung des Drehkranzgelenks ermöglicht werden soll, sondern dass über die Dämpfungseinrichtung auch eine Steuerung der Stellung der beiden Fahrzeugteile relativ zueinander erfolgen kann.

Zur Abdichtung der am Läufer angeordneten Dämpfungsrippe des Ringkammerdämpfers zur Wandung des Topfes des Ringkammerdämpfers ist eine Dichtungseinrichtung vorgesehen. Die Dichtungsrippe, die als Kolben fungiert, besitzt eine im Querschnitt U-förmige, umlaufende Nut, so dass die Ringkammer des Ringkammerdämpfers, die durch den Läufer und den Topf gebildet wird, auf allen drei Seiten gegenüber den entsprechenden Wandungen des Topfes abgedichtet ist. Da der Läufer relativ zum Topf verdrehbar in diesem gelagert ist, muss die Dichtungseinheit als dynamische Dichtung ausgebildet sein. Die Dämpfungsrippe weist insofern eine umlaufende Nut auf, wobei in der Nut ein O-Ring einsitzt, wobei auf dem O-Ring eine U-förmige Dichtung in der Nut aufliegt. Die Dämpfungsrippe ist am Läufer befestigt, beispielsweise mit diesem verschraubt. Durch den in der Nut einsitzenden O-Ring erfolgt die Anpressung der dynamischen Dichtung an die Wand des Topfes. Die drei freien Seiten der Dämpfungsrippe dienen der Aufnahme der bereits zuvor erwähnten dynamischen Dichtung, die demzufolge nach Art eines U's ausgebildet ist und auf dem O-Ring in der zuvor beschriebenen Nut einsitzt. Das heißt, die dynamische Dichtung, die beispielsweise aus einem hoch verschleißfesten Kunststoff, wie z. B. PP besteht, wird durch den in der Nut einsitzenden O-Ring auf die Wandungen des Gehäuses gepresst. Auch das mindestens eine Wandelement, durch das die Ringkammer in mehrere Teilkammern unterteilt ist, kann eine Dichtungseinrichtung aufweisen, die in gleicher Weise ausgebildet ist, wie die Dichtungseinrichtung der Dämpfungsrippe.

Anhand der Zeichnungen wird die Erfindung nachstehend beispielhaft näher erläutert.

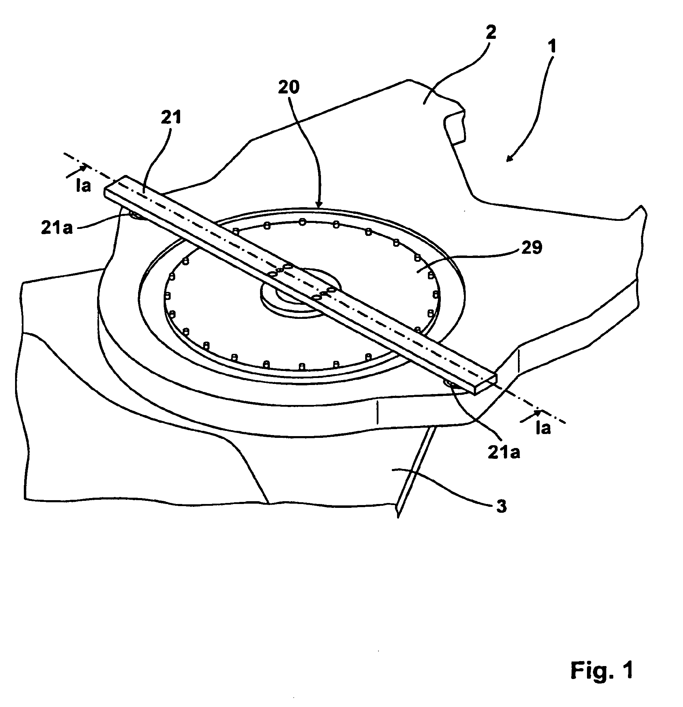

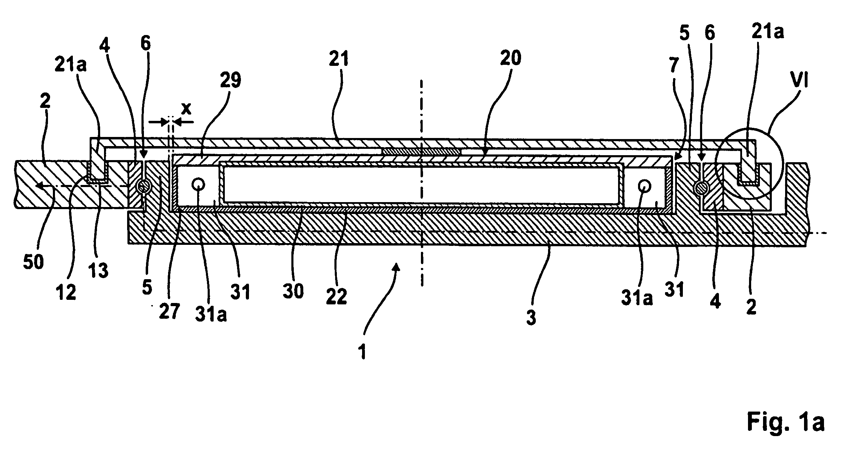

- Fig. 1: zeigt perspektivisch eine Ansicht auf das erfindungsgemäße Drehkranzgelenk;
- Fig. 1 a: zeigt schematisch einen Schnitt gemäß der Linie la aus Fig. 1;
- Fig. 2: zeigt den Topf des Ringkammerdämpfers in perspektivischer Darstellung;
- Fig. 3: zeigt den Läufer, ebenfalls in perspektivischer Darstellung;
- Fig. 3a: zeigt die Art der Abdichtung der Dämpfungsrippe durch die Dichtungseinrichtung gegenüber dem Topf des Ringkammerdämpfers;
- Fig. 3b: Fig. 3b zeigt einen Schnitt aus Fig. 3a;
- Fig. 4: zeigt den im Topf angeordneten Läufer des Ringkammerdämpfers, wobei der Deckel des Ringkammerdämpfers weggelassen ist;
- Fig. 4a: zeigt die Art der Ausbildung der Dichtungseinrichtung des Wandelementes in dem Topf des Ringkammerdämpfers zur Unterteilung der Ringkammer in mehrere Teilkammern;
- Fig. 5: zeigt eine Darstellung des Ringkammerdämpfers im durch den Deckel geschlossenen Zustand, wobei der Läufer des Ringkammerdämpfers die Traverse zur Verbindung mit dem zweiten Konsolträger aufweist.
- Fig. 6: zeigt schematisch die elastisch nachgiebige Lagerung der Traverse in dem Konsolträger.

Gemäß der Fig. 1 zeigt das insgesamt mit 1 bezeichnete Drehkranzgelenk die beiden Konsolträger 2 und 3, durch die das Drehkranzgelenk mit dem jeweiligen Fahrzeugteil (nicht dargestellt) verbunden ist. Das mit 1 bezeichnete Drehkranzgelenk zeichnet sich im Einzelnen dadurch aus, dass ein jeder Konsolträger einen Drehring 4, 5 aufweist, die den insgesamt mit 6 bezeichneten Lagerring darstellen. In den durch den Drehring 5 umschlossenen Raum 7 befindet sich der mit 20 bezeichnete Ringkammerdämpfer. Der Ringkammerdämpfer, umfassend den Topf 22 als einem Gehäuseteil und den Läufer 30 als anderem Gehäuseteil, weist, wie sich dies auch aus Fig. 1 ergibt, eine Traverse 21 auf, wobei die Traverse 21 einerseits mit dem Ringkammerdämpfer und hier auf dem Läufer und andererseits mit dem Konsolträger 2 in Verbindung steht, worauf im Weiteren noch eingegangen werden wird.

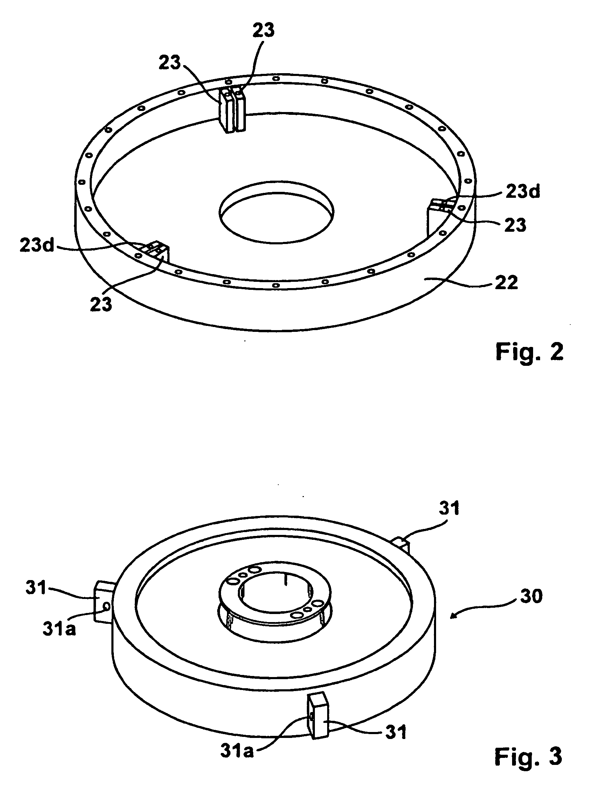

Für die Ausbildung des Ringkammerdämpfers wird auf die Fig. 2 ff. verwiesen. Fig. 2 zeigt schematisch den Topf 22 des Ringkammerdämpfers, wobei der Topf 22 des Ringkammerdämpfers drei Wandelemente 23 aufweist, die im Abstand von 120° zueinander in dem Topf 22 angeordnet sind. Die Wandelemente sind durch Verbindungselemente, z. B. Schrauben durch die Bohrungen 23d mit dem Deckel 29 verbunden.

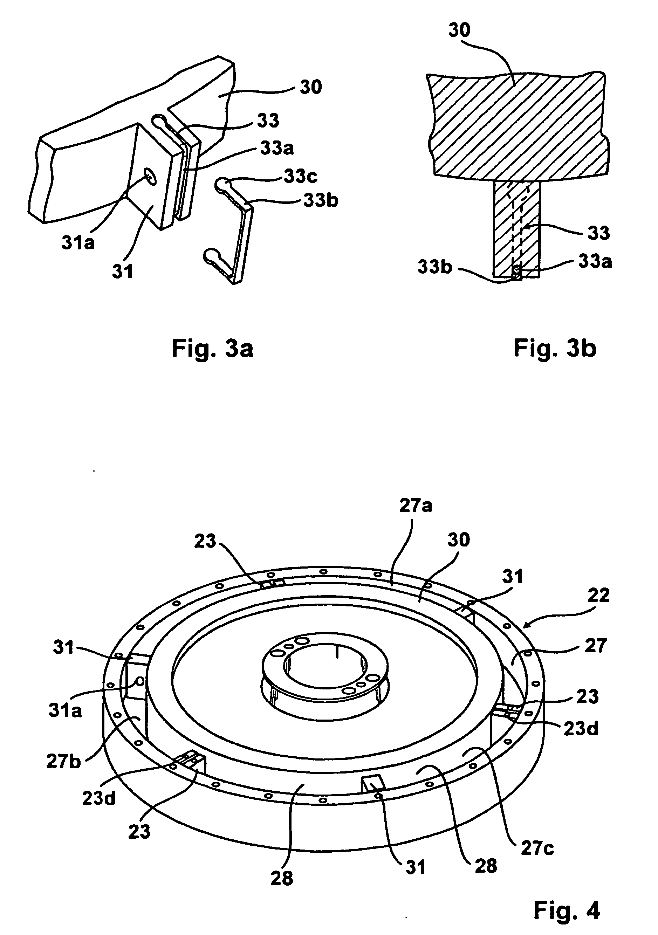

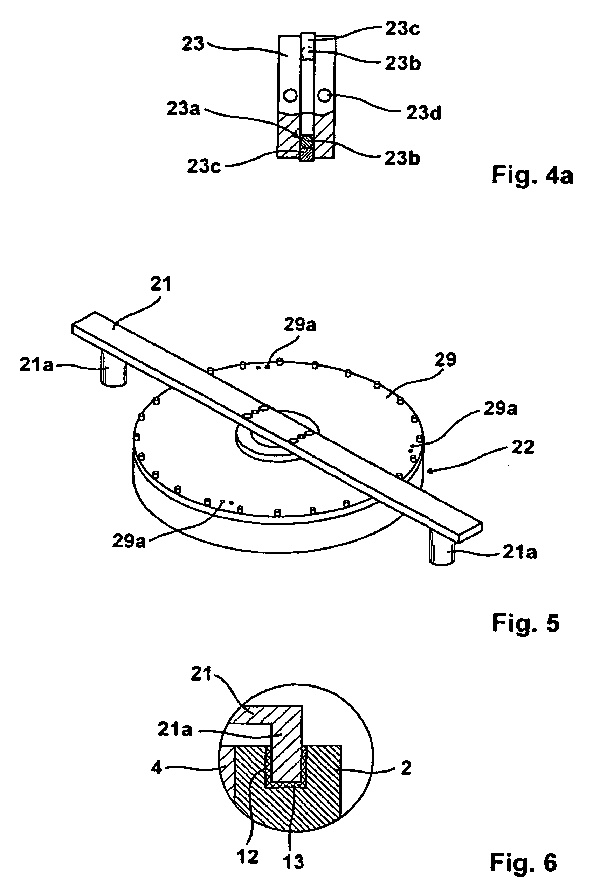

Der Topf 22 nimmt nunmehr den mit 30 bezeichneten Läufer auf, wobei der Läufer 30 auf seinem Umfang Dämpfungsrippen 31 zeigt. Befindet sich der Läufer 30 in dem Topf 22, wie in Fig. 4 dargestellt, dann wird durch die Wandelemente 23 die Ringkammer 27 in drei Teilkammern 27a - 27c unterteilt. In einer jeden dieser Teilkammern 27a - 27c befindet sich eine Dämpfungsrippe 31, wobei durch die Dämpfungsrippe 31 eine Teilkammer in zwei Ringkammerabteile 28 unterteilt wird. Die Dämpfungsrippe besitzt eine Drossel 31 a zum Durchlass des Dämpfungsfluides in der Ringkammer. Bei der Darstellung gemäß Fig. 4 fehlt letztlich noch der Deckel 29, wie in Fig. 5 dargestellt, um die Ringkammer 27 nach oben hin abzuschließen.

Der Läufer 30 gemäß Fig. 3 zeigt eine Traverse 21, wie in Fig. 5 und auch in Fig. 1, 1 a dargestellt, wobei die Traverse 21 endseitig jeweils einen Stehbolzen 21 a aufweist, wobei die Traverse durch die endseitig angeordneten Stehbolzen mit dem Konsolträger 2 in Verbindung steht, wie sich dies anschaulich aus Fig. 1a entnehmen lässt. In dem Konsolträger 2 befindet sich zur Aufnahme des Stehbolzens 21 a der Traverse 21 jeweils eine Buchse 12, in der eine Auskleidung 13 aus elastisch nachgiebigem Material, also z. B. einem Elastomer, angeordnet ist, die den Stehbolzen 22 umgibt.

Im Folgenden wird nunmehr die Abdichtung der Dämpfungsrippen 31 einerseits und auch der Wandelemente 23 andererseits betrachtet (Fig. 3a, 3b, Fig. 4a). Die Dämpfungsrippen 31, die am Läufer 30 angeordnet sind, weisen, wie sich dies aus der Fig. 3a ergibt, eine in der Ansicht U-förmige Nut 33 auf, wobei in der Nut 33 ein aus elastischen Material hergestelltes, U-förmiges Formteil 33a lagert, wobei das Formteil als statische Dichtung fungiert. Auf den O-Ring wird eine dynamische Dichtung 33b aufgebracht, die U-förmig ausgebildet ist. Die dynamische Dichtung 33b besitzt endseitig an ihren Schenkeln tellerförmige Verbreiterungen 33c, mit der die dynamische Dichtung in einer entsprechenden Ausnehmung auf der Dämpfungsrippe einliegt. Ganz ähnlich wie die Dämpfungsrippe ist auch die Dichtungseinrichtung des Wandelementes 23 in dem Topf 22 des Ringkammerdämpfers ausgebildet. Das Wandelement 23 weist eine kastenförmig umlaufende Nut auf, wobei in der Nut 23a ein O-Ring 23b einliegt, wobei auf dem O-Ring 23b die dynamische Dichtung 23c, die ebenfalls umlaufend ausgebildet ist, einsitzt. Ein jedes Wandelement besitzt auf seiner Ober- und Unterseite Bohrungen 23d zur Verbindung mit dem Deckel 29, der entsprechende Öffnungen 29a zeigt, wie dies anschaulich aus Fig. 5 erkennbar ist.

Für die Funktionsweise des Drehkranzgelenkes mit dem Ringkammerdämpfer sei nun auf Folgendes hingewiesen:
Der Ringkammerdämpfer 20 steht über dem Topf 22 mit dem Konsolträger 3 in Verbindung. In dem Topf 22 lagert der mit 30 bezeichnete Läufer (Fig. 3). Der Läufer 30 steht durch die Traverse 21 mit dem Konsolträger 2 in Verbindung. Der Konsolträger 2 weist darüber hinaus den Drehring 5 auf, der durch ein Kugellager 6 mit dem Drehring 4 verbunden ist. Sowohl der Drehring 4 als auch der Drehring 5 können hierbei Bestandteil des jeweiligen Konsolträgers sein, sie können aber auch als gesonderte Bauteile mit dem jeweiligen Konsolträger verbunden sein, beispielsweise in diesem eingepresst sein. Zwischen dem Topf 22 und dem inneren Drehring 5 besteht umlaufend ein Abstand x. Die Traverse 21 ist über die Stehbolzen 21 a durch eine entsprechende in der Buchse 12 befindliche Auskleidung aus einem Elastomer elastisch nachgiebig gegenüber dem Konsolträger 2 gelagert. Hieraus wird deutlich, dass der Kraftfluss gemäß dem Pfeil 50 (Fig. 1a) nicht durch den Ringkammerdämpfer 20 verläuft, sondern vielmehr durch das Lager 6, mit den beiden Drehringen 4, 5 der Konsolträger. Aufgrund des umlaufenden radialen Abstandes x zwischen dem Drehring 5 und der Außenwandung des Topfes 22 und die elastische Lagerung der Traverse 21 in dem Konsolträger 2 können auch Verformungen aus Wank-und Nickbewegungen aufgenommen werden, ohne dass der Ringkammerdämpfer 20 in irgendeiner Weise mit Kräften oder Momenten belastet wird.

Darüber hinaus ist die Demontage und auch entsprechend die Montage des Ringkammerdämpfers 20 möglich, ohne dass das Lager 6 entfernt werden muss. Es muss lediglich die Traverse 21 abgenommen werden, um bei dem Ringkammerdämpfer 20 nach Abnahme des Deckels 29 den Läufer herausnehmen zu können.

## Patentansprüche

1. Drehkranzgelenk (1) zwischen zwei Fahrzeugteilen, z. B. einem Gelenkbus, wobei das Gelenk zwei Konsolträger (2, 3) umfasst, wobei ein jeder Konsolträger (2, 3) an einem Fahrzeugteil angeordnet ist, wobei jeder Konsolträger einen Drehring (4, 5) aufweist, wobei die beiden Drehringe (4, 5) der Konsolträger (2, 3) ineinander drehbar gelagert sind, wobei zur Dämpfung der Drehbewegung der beiden Konsolträger (2, 3) relativ zueinander eine Dämpfungseinrichtung (20) vorgesehen ist,
**dadurch gekennzeichnet,**
**dass** in dem durch den inneren Drehring (5) umschlossenen Raum ein Ringkammerdämpfer (20) angeordnet ist, wobei der Ringkammerdämpfer (20) zwei ineinander gelagerte, relativ zueinander verdrehbare Gehäuseteile (22, 30) aufweist, wobei das eine Gehäuseteil (22) mit dem einen und das andere Gehäuseteil (30) mit dem anderen Konsolträger (2, 3) in Verbindung steht.

2. Drehkranzgelenk nach Anspruch 1,
**dadurch gekennzeichnet,**
**dass** der Ringkammerdämpfer (20) einen Topf (22) umfasst, der an einem ersten Konsolträger (3) angeordnet ist, wobei der Topf (22) einen Läufer (30) aufnimmt, der relativ verdrehbar zum Topf (22) in dem Topf (22) gelagert ist, wobei der Läufer (30) mit dem anderen zweiten Konsolträger (2) in Verbindung steht.

3. Drehkranzgelenk nach einem der voranstehenden Ansprüche,
**dadurch gekennzeichnet,**
**dass** zur Verbindung zwischen dem Läufer (30) und dem anderen zweiten Konsolträger (2) eine Traverse (21) vorgesehen ist.

4. Drehkranzgelenk nach einem der voranstehenden Ansprüche,
**dadurch gekennzeichnet,**
**dass** Ringkammerdämpfer (20) vom Kraftfluss zwischen Vorder- und Hinterwagen durch die beiden Konsolträger (2, 3) entkoppelt ist.

5. Drehkranzgelenk nach einem der voranstehenden Ansprüche,
**dadurch gekennzeichnet,**
**dass** mindestens ein Gehäuseteil (22, 30) des Ringkammerdämpfers (20) gegenüber dem mindestens einen Konsolträger (2, 3) elastisch nachgiebig gelagert ist.

6. Drehkranzgelenk nach einem der voranstehenden Ansprüche,
**dadurch gekennzeichnet,**
**dass** die Traverse (21) elastisch nachgiebig in dem Konsolträger (2) und/oder dem Läufer (30) gelagert ist.

7. Drehkranzgelenk nach einem der voranstehenden Ansprüche,
**dadurch gekennzeichnet,**
**dass** die Traverse (21) endseitig Stehbolzen (21 a) aufweist, wobei mindestens einer der Stehbolzen (21 a) in eine Buchse (12) des Konsolträgers (2) eingreift, wobei die Buchse (12) eine Auskleidung (13) aus elastisch nachgiebigem Material aufweist.

8. Drehkranzgelenk nach einem der voranstehenden Ansprüche,
**dadurch gekennzeichnet,**
**dass** der Läufer (30) oder der Topf (22) des Gehäuses des Ringkammerdämpfers (20) mindestens eine Dämpfungsrippe (31) aufweist, die in die durch den Topf (22) und den Läufer (30) gebildete Ringkammer (27) hineinragt.

9. Drehkranzgelenk nach einem der voranstehenden Ansprüche,
**dadurch gekennzeichnet,**
**dass** durch die mindestens eine Dämpfungsrippe (31) zwei Ringkammerabteile (28) gebildet werden, wobei zwischen den Ringkammerabteilen (28) eine Drosselverbindung vorgesehen ist.

10. Drehkranzgelenk nach einem der voranstehenden Ansprüche,
**dadurch gekennzeichnet,**
**dass** die Ringkammer (27) durch mindestens ein Wandelement (23) in mehrere Teilkammern (27a bis 27c) teilbar ist, wobei in jede Teilkammer (27a bis 27c) eine Dämpfungsrippe (31) ragt.

11. Drehkranzgelenk nach einem der voranstehenden Ansprüche,
**dadurch gekennzeichnet,**
**dass** die Dämpfungsrippe (31) als Kolben ausgebildet ist.

12. Drehkranzgelenk nach Anspruch 11,
**dadurch gekennzeichnet,**
**dass** die Dämpfungsrippe (31) und/oder mindestens ein Wandelement (23) in Abdichtung zur Ringkammer (27) eine Dichtungseinrichtung (23b, 23c, 33a, 33b) aufweist.

13. Drehkranzgelenk nach Anspruch 12,
**dadurch gekennzeichnet,**
**dass** die Dichtungseinrichtung eine statische Dichtung, z. B. einen O-Ring (23b, 33a) umfasst, auf dem eine dynamische Dichtung (23c, 33b) aufliegt.

14. Drehkranzgelenk nach einem der voranstehenden Ansprüche,
**dadurch gekennzeichnet,**
**dass** die Dichtungseinrichtung in einer Nut (23a, 33) der Dämpfungsrippe (31) und/oder des Wandelements (23) lagert.

## Claims

1. A ring-mount joint (1) between two vehicle units, for example of an articulated bus, with the joint comprising two cantilevers (2, 3), wherein each cantilever (2, 3) is arranged on one of the vehicle units, with each cantilever comprising a slewing ring (4, 5), wherein the two slewing rings (4, 5) of the cantilevers (2, 3) are pivotably mounted inside each other, wherein a damping device (20) is provided for damping the rotational motion of the two cantilevers (2, 3) relative to each other,
**characterized in that**
in the space enclosed by the inner slewing ring (5), an annular chamber damper (20) is disposed, wherein the annular chamber damper (20) comprises two inter-mounted housing parts (22, 30) that are rotatable relative to each other, wherein the one housing part (22) is in connection with the one cantilever and the other housing part (30) is in connection with the other cantilever (2, 3).

2. The ring-mount joint according to claim 1,
**characterized in that**
the annular chamber damper (20) includes a pot (22), which is disposed on a first cantilever (3), wherein the pot (22) receives a rotor that is mounted in the pot (22) so that it is rotatable relative to the pot (22), with the rotor (30) being in connection with the other second cantilever (2).

3. The ring-mount joint according to one of the afore-mentioned claims,
**characterized in that**
a cross-bar (21) is provided for the connection between the rotor (30) and the other, second cantilever (2).

4. The ring-mount joint according to one of the afore-mentioned claims,
**characterized in that**
annular chamber damper (20) is decoupled from the power flow between the front and rear vehicle units by the two cantilevers (2, 3).

5. The ring-mount joint according to one of the afore-mentioned claims,
**characterized in that**
at least one housing part (22, 30) of the annular chamber damper (20) is mounted elastically yielding relative to the at least one cantilever (2, 3).

6. The ring-mount joint according to one of the afore-mentioned claims,
**characterized in that**
the cross-bar (21) is mounted, in an elastically yielding manner, in the cantilever (2) and/or the rotor (30).

7. The ring-mount joint according to one of the afore-mentioned claims,
**characterized in that**
the cross-bar at its end comprises studs (21a), wherein at least one of the studs (21a) engages with a socket (12) of the cantilever (2), wherein the socket (12) comprises a lining (13) made of elastically resilient material.

8. The ring-mount joint according to one of the afore-mentioned claims,
**characterized in that**
the rotor (30) in the pot (22) of the housing of the annular chamber damper (20) comprises at least one damping rib (31), which protrudes into the annular chamber (27) formed by the pot (22) and the rotor (30).

9. The ring-mount joint according to one of the afore-mentioned claims,
**characterized in that**
the at least one damping rib (31) forms two annular chamber compartments (28), wherein a throttle connection is provided between the annular chamber compartments (28).

10. The ring-mount joint according to one of the afore-mentioned claims,
**characterized in that**
the annular chamber (27) is divisible into several sub-chambers (27a to 27c) by at least one wall element (23), wherein a damping rib (31) protrudes into every sub-chamber (27a to 27c).

11. The ring-mount joint according to one of the afore-mentioned claims,
**characterized in that**
the damping rib (31) is configured as a piston.

12. The ring-mount joint according to claim 11,
**characterized in that**
the damping rib (31) and/or at least one wall element (23) comprise a sealing device (23b, 23c, 33a, 33b) to seal the annular chamber (27).

13. The ring-mount joint according to claim 12,
**characterized in that**
the sealing device comprises a static seal, e.g. an O-ring (23b, 33a), on which rests a dynamic seal (23c, 33b).

14. The ring-mount joint according to one of the afore-mentioned claims,
**characterized in that**
the sealing device is mounted in a groove (23a, 33) of the damping rib (31) and/or the wall element (23).

## Revendications

1. Articulation à couronne pivotante (1) montée entre deux parties de véhicule, par exemple d'un bus articulé, dans laquelle l'articulation comporte deux supports en console (2, 3), dans laquelle chaque support en console (2,3) est solidaire d'un châssis de véhicule, dans laquelle chaque support en console comporte une bague rotative (4, 5), les deux bagues rotatives (4, 5) des supports en consoles (2, 3) étant montées au moyen de roulements l'une dans l'autre et dans laquelle l'amortissement du mouvement de rotation des deux supports en console (2, 3), l'un par rapport à l'autre comprend un dispositif d'amortissement (20),
**caractérisée en ce que**
l'espace qui entoure la bague rotative intérieure (5) comporte un amortisseur à chambre annulaire (20), **en ce que** l'amortisseur à chambre annulaire (20) se compose de deux parties de chambre (22, 30) montées sur roulement et rotatives l'une relativement à l'autre et **en ce que** l'un des éléments de chambre (22) et l'autre élément de chambre (30) sont liés respectivement aux deux supports en console (2, 3).

2. Articulation à couronne pivotante (1) selon la revendication 1,
**caractérisée en ce que**
l'amortisseur de chambre annulaire (20) comporte un pot (22) qui est monté dans un premier support de console (3), **en ce que** le pot (22) contient un rotor (30) qui est monté sur roulement et se déplace en rotation par rapport au pot (22) et **en ce que** le rotor (30) est lié à l'autre support en console (2).

3. Articulation à couronne pivotante (1) selon l'une des revendications précédentes,
**caractérisée en ce que**
la liaison entre le rotor (30) et l'autre support en console (2) est assurée par une traverse (21).

4. Articulation à couronne pivotante (1) selon l'une des revendications précédentes,
**caractérisée en ce que**
l'amortisseur à chambre annulaire (20) est déconnecté par le fluide hydraulique couplant le véhicule avant et le véhicule arrière à travers les deux supports en console (2, 3).

5. Articulation à couronne pivotante (1) selon l'une des revendications précédentes,
**caractérisée en ce que**
au moins un élément de chambre (22, 30) de l'amortisseur à chambre annulaire (20) est monté élastiquement par rapport audit au moins un support en console (2, 3).

6. Articulation à couronne pivotante (1) selon l'une des revendications précédentes,
**caractérisée en ce que**
la traverse (21) est montée élastiquement dans le support en console (2) et/ou par rapport au rotor (30).

7. Articulation à couronne pivotante (1) selon l'une des revendications précédentes,
**caractérisée en ce que**
la traverse (21) comporte à ses extrémités des boulons filetés (21a) dont au moins un des boulons filetés (21a) est engagé dans une douille (12) du support en console (2), la douille (12) comportant un revêtement (13) en un matériau déformable élastique.

8. Articulation à couronne pivotante (1) selon l'une des revendications précédentes,
**caractérisée en ce que**
le rotor (30) ou le pot (22) de la chambre de l'amortisseur à chambre annulaire (20) comporte au moins une nervure d'amortisseur (31) qui pénètre dans la chambre annulaire (27) constituée par le pot (22) et du rotor (30).

9. Articulation à couronne pivotante (1) selon l'une des revendications précédentes,
**caractérisée en ce que**
au moins une nervure d'amortisseur (31) forme deux parties de chambre annulaire (28) et **en ce qu'**une liaison par étranglement est ménagée entre les deux parties de chambre annulaire (28).

10. Articulation à couronne pivotante (1) selon l'une des revendications précédentes,
**caractérisée en ce que**
la chambre annulaire (27) est séparée en plusieurs chambres partielles (27a à 27c) au moyen d'au moins un élément de paroi (23) et **en ce qu'**une nervure d'amortisseur (31) s'engage dans chaque chambre partielle (27a à 27c).

11. Articulation à couronne pivotante (1) selon l'une des revendications précédentes,
**caractérisée en ce que**
la nervure d'amortisseur (31) se présente sous la forme d'un piston.

12. Articulation à couronne pivotante (1) selon la revendication 11 **caractérisée en ce que**
la nervure d'amortisseur (31) et/ou au moins un élément de paroi (23) comporte un dispositif d'étanchéité (23b, 23c, 33a, 33b) pour étanchéifier la chambre annulaire (27).

13. Articulation à couronne pivotante (1) selon la revendication 12
**caractérisée en ce que**
le dispositif d'étanchéité comporte un joint statique, par exemple un joint torique (23b, 33a) sur lequel s'appuie un joint dynamique (23c, 33b).

14. Articulation à couronne pivotante (1) selon l'une des revendications précédentes,
**caractérisée en ce que**
le dispositif d'étanchéité est logé dans une rainure (23a, 33) de la nervure d'amortisseur (31) et/ou de l'élément de paroi (23).
